(19) Europäisches Patentamt
European Patent Office
Office européen des brevets

(11) EP 4 549 775 A1

(12) EUROPEAN PATENT APPLICATION

(43) Date of publication:
**07.05.2025 Bulletin 2025/19**

(21) Application number: **24209842.4**

(22) Date of filing: **30.10.2024**

(51) International Patent Classification (IPC):
***F16F 7/116*** *(2006.01)* ***F16F 15/03*** *(2006.01)*
*F16F 1/02* *(2006.01)* *F16F 6/00* *(2006.01)*

(52) Cooperative Patent Classification (CPC):
**F16F 7/116; F16F 15/03;** F16F 1/027; F16F 6/005; F16F 2222/06; F16F 2228/001; F16F 2228/06; F25B 2500/13

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.10.2023 US 202363546336 P**

(71) Applicant: **Cryo Tech Ltd.**
**1896500 Ein Harod (Meuhad) (IL)**

(72) Inventor: **VEPRIK, Alexander**
**2603706 Kiriyat Motzkin (IL)**

(74) Representative: **Pearl Cohen Zedek Latzer Baratz UK LLP**
**The Gridiron Building**
**One Pancras Square**
**London N1C 4AG (GB)**

# (54) TUNED DYNAMIC COUNTER-BALANCER WITH MAGNETIC SPRING

(57) A tuned dynamic counter-balancer (200, TDC) comprising: a mount for coupling the TDC to an object for vibration attenuation; a movable assembly (201) configured to move along a first axis and comprising a movable magnetic ring (210) and a movable proof mass (208); a stationary assembly (203) comprising a stationary magnetic ring (202) and coupled to the mount; a mechanical spring comprising a flexure bearing that includes two planar springs (214) that connect between the movable assembly and the stationary assembly, wherein the movable magnetic ring and the stationary magnetic ring are arranged coaxially, and wherein a spring rate of the magnetic spring is greater than a spring rate of the mechanical spring.

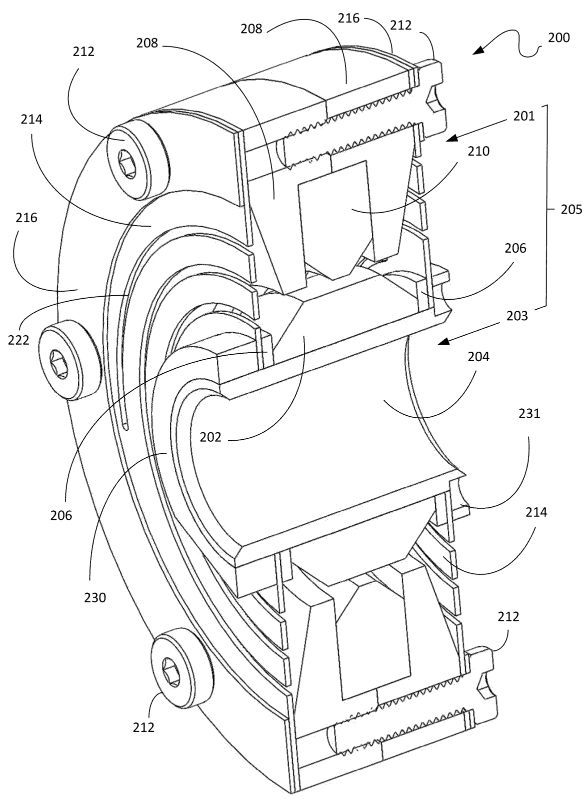


FIG. 2

EP 4 549 775 A1

## Description

### FIELD OF THE INVENTION

The present invention relates to a tuned dynamic counter-balancer for attenuation of tonal vibration export produced by linear machine driven by a linear actuator at a generally fixed frequency. More particularly, the present invention relates to a tuned dynamic counter-balancer with a magnetic spring for attenuating vibration export produced by an object with reciprocating internal assembly, such as a piston assembly of a linear piston compressor of a Stirling-type linear cryocooler.

### BACKGROUND OF THE INVENTION

The second law of thermodynamics states that heat spontaneously flows from warmer objects to cooler objects. The direction of heat flow may, however, be reversed to pump heat from an object at a lower temperature than its surroundings by applying external work. This principle is employed in cooling devices such as heat pumps (refrigerators), where the heat is absorbed at a colder location and rejected to a warmer environment. In the case where the cool location is cooled to cryogenic temperatures, such a cooling device is sometimes referred to as a "cryocooler".

For example, a cryocooler may be used to maintain a focal plane array of an infrared imager at a cryogenic temperature in order to attenuate intrinsic thermally-induced noise, thus enabling long working ranges, and short integration times along with high spatial and temperature resolution. It is generally desired that a cooling device for such an application be sufficiently cost-effective and small so as to fit inside an infrared imager or other electro-optical device in which the detector is incorporated and consumes low electrical power.

Typically, such a cryocooler operates on the basis of a closed Stirling thermodynamic cycle, during which a gaseous working fluid (e.g., helium, nitrogen, or another suitable, usually inert, gas) is cyclically compressed in a compression chamber of a piston compression unit (compressor) and allowed to cyclically expand within an expansion chamber of an expander unit while performing mechanical work on an expansion piston (displacer), thus resulting in a favorable cooling effect.

The expansion work is typically recovered and further used to support actuation of the compression piston.

A cold tip of the cold finger that includes an expansion chamber which is placed in thermal contact with the infrared focal plane array or other object that is to be cooled. Heat is pumped from the cooled object during an expansion phase of the thermodynamic cycle.

A reciprocating expansion piston (displacer), containing a porous regenerative heat exchanger, is moved back and forth within the cold finger to transfer heat from the expansion chamber to a warm chamber at a base of the expander unit, typically at the opposite end of the expander unit from the expansion chamber. The transferred heat is further rejected to the environment from the warm chamber during a compression stage of the thermodynamic cycle.

The regenerative heat exchanger (regenerator) is the key component having a significant influence on the overall performance of the cryogenic cooler. In the compression stage of the Stirling cycle, the regenerator absorbs heat from the gaseous working fluid, while releasing heat to the working agent during the expansion stage of the Stirling cycle.

Linear split Stirling cryocoolers are often used in cryogenically cooled infrared imagers, where compactness is of primary concern. Such refrigerators of split type may be comprised of the linear compression unit (linear piston compressor) and pneumatic expansion unit (expander) interconnected by a configurable and flexible transfer line. A linear actuator of "moving coil", "moving magnet" or "moving iron" type may drive a linear piston compressor. A moving assembly of a pneumatic expander (displacer) may be spring-assisted and resonantly driven by a cyclic pressure wave generated by the piston compressor. The differential piston may be attached to the warm side of the displacer to generate the differential driving force.

Split configuration may be favorable as it allows for maximum flexibility in the packaging of should be compact hand-held and gyro-stabilized infrared imagers.

For the small size of infrared imager, the compressor unit and expander unit may be packed side-by-side and supported one from the other by the dedicated frame serving as an optical bench or directly by the imager enclosure.

Vibration export is produced by both the compressor and expander units. It may be produced by an imbalanced motion of the moving assemblies of the compressor and the expander units. Typically, the magnitude of tonal vibratory force equals to the product of the moving mass, stroke, and driving frequency squared. The weight of the moving assembly in the compressor unit is substantially heavier than in the moving assembly of the expander; that is why the compressor is usually thought of as the primary source of vibration export.

Modern low size, weight and power (SWAP) cryocoolers may feature very lightweight moving assemblies, thus the magnitudes of tonal vibratory forces and moments may be relatively low and tolerated in some examples when used in heavy or rigidly mounted infrared imagers.

However, when used with lightweight handheld or gyro stabilized imagers, tonal vibratory forces and moments of lighter and smaller cryocoolers may result in intolerable translational and tilt dynamic responses that may inflict image smearing.

One of the possible approaches to addressing the issue of high vibration export produced by the piston compressor, as widely preferred by the industry, is a presumably vibration-free dual piston compressor, where two presumably identical single piston sub-compressors are collinearly aligned in a common housing and driven oppositely. Opposite countermotion of the piston assemblies may result in substantial counterbalancing and lowered vibration export. Provided the sub-compressor assemblies are identical in terms of piston/cylinder clearances, friction factors, moving masses, and actuators, the residual vibration export should be nullified.

As compared with the single piston compressor, the primary penalty is an essential increase of the incurred manufacturing costs due to doubling the amount of mechanical parts and labor required for matching the sub-compressor assemblies. Further penalty is increased size, weight and loss of performance because of the use of smaller electromagnetic actuators.

However, such dual-piston compressors are, disappointedly, not entirely vibration-free. Due to inevitable discrepancies of values of piston/cylinder clearances and friction factors, typical of rubbing seals designs, the residual vibration export, as reported by major cryocooler makers, may vary from 0.5N to 1N root mean square (RMS). It is also important to notice that this vibration export may be time-dependent and may increase over the service period because of uneven wear of the rubbing seals.

Assuming a cryogenic cooler is driven at a fixed and tunable frequency, another solution to addressing an issue of excessively high vibration export is using a tuned dynamic counter-balancer (TDC) - an auxiliary undamped single degree of freedom translational "mass-spring" mechanical resonator, the resonance frequency of which is tuned to the driving frequency or vice versa.

For best performance, said TDC may be mounted directly in the compressor housing or at any other convenient place in the system; the axis of its translation is designed to be collinear with the axis of the piston assembly motion.

When properly tuned, said auxiliary mass may move in opposition to the piston assembly such that the force of reaction counterbalances vibration export produced by the piston assembly.

Typically, it is advised to design the TDC as a translational, single degree of freedom undamped "mass-spring" mechanical resonator, where the frequencies of tilting, in-plane translations, and rotation about the axis are well separated from the frequency of translational mode which needs to be tuned essentially to the driving frequency (or vice versa).

When applied to a single piston compressor of Stirling cryocooler, such passive dynamic devices may be designed in the form of a proof ring made of high-density material (e.g., stainless steel - SST, Tungsten, Tungsten-Copper) which is supported on both sides by planar springs (e.g., circular disk-like springs) made of thin sheet of steel with spiral slits providing for required axial compliance; the radial stiffness is by design essentially higher than the axial stiffness.

For a failure-free operation, the stroke of the TDC may be designed to be limited as to ensure maximum equivalent stresses in the arms of the flexure bearings are well below the fatigue strength typical of the chosen spring material.

In many instances the structural damping in a cyclically deformed flexure bearing may be designed to be as low as possible and also the spring rate should be constant over the entire range of working strokes, thus enabling persistency of the resonant frequency.

The above requirements may come into contradiction with the possible weight and size constraints. Namely, reducing the weight and outer diameter of the planar springs of the dynamic counter-balancer may result in a larger stroke, thus increasing structural damping, nonlinear effects, and stresses in the material of the support spring. The combination of the above factors may result in a loss of performance along with spring fatigue and failure. Sometimes it is simply impossible to design failure-free planar springs.

A need, therefore, may exist for providing a low-weight and compact TDC capable of operating with the enlarged stroke while being failure-free, low damped and linear over the entire range of working strokes.

## SUMMARY OF THE INVENTION

There is provided, in accordance with some embodiments of the present invention, a tuned dynamic counter-balancer (TDC). The TDC may include a mount for coupling the TDC to an object for vibration attenuation; a movable assembly configured to move along a first axis and comprising a movable magnetic ring and a movable proof mass, in the form of a proof ring; a stationary assembly comprising a stationary magnetic ring and coupled to the mount; and a mechanical spring comprising two planar disk springs that connect between the movable assembly and the stationary assembly, wherein the movable magnetic ring and the stationary magnetic ring are arranged coaxially, and wherein a spring rate of the magnetic spring is substantially greater than a spring rate of the mechanical spring.

According to some embodiments of the present invention, the spring rate of the magnet spring is greater by at least an order of magnitude than the spring rate of the mechanical spring.

According to some embodiments of the present invention, the movable magnetic ring is internal with respect to the stationary magnetic ring.

According to some embodiments of the present invention, the movable magnetic ring is external with respect to the stationary magnetic ring.

According to some embodiments of the present invention, the proof mass comprises a proof ring.

According to some embodiments of the present invention, the proof mass is made of two parts.

According to some embodiments of the present invention, the two parts are two halves of the proof mass.

According to some embodiments of the present invention, the two parts of the proof mass wrap the movable magnetic ring.

According to some embodiments of the present invention, the two planar disk springs are positioned on opposite sides of the movable assembly.

According to some embodiments of the present invention, the movable magnetic ring and the stationary magnetic ring are axially and parallelly magnetized.

According to some embodiments of the present invention, the movable magnetic ring and the stationary magnetic ring are axially and oppositely magnetized.

According to some embodiments of the present invention, the movable magnetic ring and the stationary magnetic ring are axially and unidirectionally magnetized.

According to some embodiments of the present invention, the object for vibration attenuation is a compressor of a cryogenic cooler.

According to some embodiments of the present invention, the spring rate of the magnetic spring is configured to be $K_{mag} = 4\pi^2 f_{res}^2 M_C - K_{mech}$, where $K_{mag}$ is the spring rate of the magnetic spring, $K_{mech}$ is the spring rate of the mechanical spring, $f_{res}$ is a required resonant frequency of the TDC, which is preferably equal to the driving frequency of the object for vibration attenuation, and $M_c$ is the mass of the moving assembly.

According to some embodiments of the present invention, there is provided a compressor of a cryogenic cooler comprising a compressor with the TDC attached to the compressor for vibration attenuation.

BRIEF DESCRIPTION OF THE DRAWINGS

In order for the present invention to be better understood and for its practical applications to be appreciated, the following Figures are provided and referenced hereafter. It should be noted that the Figures are given as examples only and in no way limit the scope of the invention. Like components are denoted by like reference numerals.

Fig. 1 schematically illustrates a tuned dynamic counter-balancer (TDC) , according to some embodiments of the invention with a proof mass supported from the linear machine by a combination of mechanical and magnet springs

Fig. 2 shows a cross-sectional isometric view of a TDC, according to some embodiments of the present invention, with a stationary assembly and a moving assembly, including a magnetic spring that includes coaxial stationary and a movable magnetic rings, the stationary magnetic ring being internal and the movable magnetic ring being external with respect to each other and arranged coaxially.

Fig. 3 shows a planar disk spring that is suitable for employment in a TDC, according to some embodiments of the invention

Fig. 4 shows a proof mass suitable for a TDC, according to some embodiments of the invention, featuring axial slits for reducing eddy currents

Fig. 5 shows the experimentally measured force of reaction of the mechanical spring at different axial positions of the proof mass, according to some embodiments of the invention.

Figs. 6A, 6B and 6C show the lines of magnetic flux between the two magnets of the TDC of Fig. 2, in different relative positions of the magnets, according to some embodiments of the invention.

Fig. 6D is a graph showing the dependence of the mechanical force exerted upon the movable magnetic ring at different axial positions, according to some embodiments of the present invention.

Fig. 6E is a graph showing the line representing the total reaction force produced by the mechanical and magnetic springs, according to some embodiments of the present invention.

Fig. 7 shows a cross-sectional isometric view of a TDC, according to some other embodiments of the present invention, with a magnetic spring that includes coaxial stationary and a movable magnetic rings, the movable magnetic ring being internal and the stationary magnetic ring being external with respect to each other.

Fig. 8 shows a TDC according to some embodiments of the present invention, coupled to the compressor of a Stirling type cryogenic cooler.

DETAILED DESCRIPTION OF THE INVENTION

In the following detailed description, numerous specific details are set forth in order to provide a thorough understanding of the invention. However, it will be understood by those of ordinary skill in the art that the invention may be practiced without these specific details. In other instances, well-known methods, procedures, components, modules, units and/or circuits have not been described in detail so as not to obscure the invention.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium (e.g., a memory) that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. Unless explicitly stated, the method embodiments described herein are not constrained to a particular order or sequence. Additionally, some of the described method embodiments or elements thereof can occur or be performed simultaneously, at the same point in time, or concurrently. Unless otherwise indicated, the conjunction "or" as used herein is to be understood as inclusive (any or all of the stated options).

There is thus provided, in accordance with some embodiments of the invention, a tuned dynamic counter-balancer (TDC) that includes a stationary mechanical mount, for mounting and anchoring the TDC onto an object for which it is desired to attenuate vibrations, such as, for example (but not limited to), a compressor of a Stirring type cryogenic cooler. A TDC, according to some embodiments, further includes a proof mass which is supported, e.g., from opposing sides of the proof mass, by planar springs having low spring rate in axial direction and high stiffness in nradial direction and by a magnetic spring that may include a stationary component and a movable component, wherein the movable component of the magnetic spring is attached to the proof mass.

In some embodiments of the present invention, the proof mass may be provided in a form of a ring. The proof mass may be made of nonmagnetic material, preferably having high density (e.g. stainless steel, bronze, tungsten, tungsten-copper, etc) to reduce size of the proof mass at a given weight. In some embodiments of the present invention the proof mass may have a trapezoidal cross-section. An array of threaded holes may be provided at the proof mass periphery for fastening the periphery of flexure bearing.

Two planar spring forming the a flexure bearing may be provided for supporting the proof mass and may be made, for example by photoetching, of thin spring steel sheet metal (e.g. SST 302, full hard) in the form of, for example, a round disk featuring a central hole, an array of spiral slits and an array of holes at an outer periphery which may be matched with threaded holes provided on the proof mass for anchoring each of the planar springs to the periphery on the proof mass. The flexure bearings may be very compliant in the direction of translation of the proof mass, having a spring coefficient that is smaller, e.g., substantially smaller, for example, in some embodiment smaller by an order of magnitude, than a spring coefficient of the magnetic spring.

Two outer spacers may also be provided and may feature an array of holes matched with those of the proof mass. Fasteners may be used, for example fasteners that protrude through said matched holes in the outer spacers and in the flexure bearing into threaded holes made in the proof mass.

The magnetic spring, which is designed to also oscillate in the direction of translation of the proof mass translation in this embodiment may be, for example, in the form of two axially and parallelly (e.g. oppositely or unidirectionally) magnetized coaxial and width-centered magnetic rings having trapezoidal cross sections; the movable outer magnetic ring may be attached to the proof mass and the stationary magnetic ring may be mounted upon an outer diameter of the holder between a central portion of the flexure bearings and locked by a locking nut. Inner spacers may be provided facing the central hole of the flexure bearings.

The spring rate for the magnet spring $K_{mag}$ may be chosen with respect to the desired resonant frequency, $f_{res}$, and is equal to the optimum driving frequency of the cryocooler, effective moving mass of the TDC, $M_c$, including the masses of the proof mass, and the movable magnetic ring, outer spacers, fasteners and dynamic portions of the flexure bearings and the axial spring rate of the flexure bearings $K_{mech}$. Namely, $K_{mag} = 4\pi^2 f_{res}^2 M_C - K_{mech}$ , , where $K_{mag}$ is the spring rate of the magnetic spring, $K_{mech}$ is the spring rate of the mechanical spring, $f_{res}$ is a required resonant frequency of the TDC, which is preferably equal to the driving frequency of the object for vibration attenuation, and $M_c$ is the effective mass of the moving assembly.

The holder may be fastened or otherwise firmly coupled to the compressor directly or upon the system collinearly with the axis of the piston assembly reciprocation.

According to some embodiments of the present invention the spring rate of the flexure bearing in the translation direction of the proof mass may be much lower with respect to the spring rate in the planar direction of the flexure bearing, which is substantially orthogonal to the translation direction of the proof mass. The spring rate in the radial direction is chosen as needed for stable operation of the magnet spring .

Because of the lowered required translational spring rate of the flexure bearings, they can be designed such as to withstand enlarged strokes without overstressing and developing fatigue inflicted damage. In that respect the required, much higher, translational spring rate may be fully balanced by the magnet spring, allowing to maintain reduced weight and size of the TDC.

Structural damping is proportional to the spring rate, thus lowering the translational spring rate of the flexure bearings in a TDC and using frictionless magnetic spring according to some embodiments of the invention can result in favorable lowering structural damping and better attenuation of cooler-induced vibration, where the attenuation rate is proportional to the damping ratio.

Additional advantage may be related to lowering the expected level of the stresses in the material of the flexure bearings, thus allowing use of cost-effective materials having moderate fatigue strength, like full hard SST 302 (560MPa) instead of Sandvik 11R51 (750MPa).

Fig. 1 schematically illustrates a tuned dynamic counter-balancer (TDC) 100, according to some embodiments of the invention. In Fig 1 the stationary assembly 102 is for mounting to the object for vibration protection (e.g. cryocooler) and supporting stationary terminals of mechanical spring 104 having spring rate $K_{mech}$ and magnetic spring 106 having spring rate $K_{mag}$, where $K_{mag} \gg K_{mech}$. In Fig. 1 the proof movable mass $M_C$ 108 is connected to the movable terminals of mechanical spring 104 and magnetic spring 106.

The function of the mechanical spring is to provide a mechanical stability to TDC enhanced with magnetic spring, which is usually considered mechanically unstable (recall Earnshaw's theorem).

The total spring rate of the schematical TDC depicted in Fig. 1 is $K_C = K_{mach} + K_{mag}$ and the resonant frequency

$$\Omega_C = \sqrt{\frac{K_C}{M_C}} = \sqrt{\frac{K_{mach} + K_{mag}}{M_C}}\ . \qquad (1)$$

The effective damping ratio is, therefore

$$\zeta_C = \frac{B_{mech}}{2M_C\Omega_C} = \sqrt{\frac{1}{1+\eta}}\zeta_{mech} \qquad (2)$$

where $\eta = \frac{K_{mag}}{K_{mech}}$ is the ratio of spring rates of the magnetic and mechanical springs, $B_{mech}$, $\zeta_{mech}$ are damping in mechanical spring and mechanical damping ratio, respectively

For example, assuming the ratio of the spring rates of the magnetic and mechanical springs to be $\eta = 10$, the effective damping ratio may be 3.3-fold reduced as compared with the case of a counter-balancer with only mechanical spring. This provides an ample compensation of reduced weight of the proof mass. The mechanical stresses in the soft mechanical springs may be much relieved to well below the levels of fatigue strength typical of the spring steels.

Fig. 2 shows a cross-sectional isometric view of a TDC 200, according to some embodiments of the present invention, with a magnetic spring that includes coaxial stationary and a movable magnetic rings, the stationary magnetic ring being internal and the movable magnetic ring being external with respect to each other.

With reference to Fig. 2, TDC 200 has a movable assembly 201 and a stationary assembly 203. The movable assembly 201 includes a proof mass (two halves 208 wrapping a movable magnet ring 210 having an axial magnetization direction. The two halves of the proof mass may be coupled to each other by screws 212. A mechanical spring is formed by two generally planar disk springs 214 on opposite sides of the movable assembly 201. Spacers 216 are provided as a part of the movable assembly 201.

In Fig 2, stationary assembly 201 includes stationary magnetic ring 202 having axial magnetization direction which surrounds tubular holder 204. Spacers 206 may provided on both sides of the stationary magnetic ring 202 for tightly holding the stationary assembly parts together. Holes 218 (see Fig. 3) are provided on the periphery of disk springs 214 and matching bores are provided in the proof mass for screws 212 to hold the two halves of the proof mass together and for coupling of the disk springs on either side of the movable assembly. The components of stationary assembly 201 may be tightened by a locking nut 230.

Magnetic spring 205 is formed by movable magnet ring 210 and stationary magnet ring 202 that are aligned coaxially and width-centered. In this embodiment, movable assembly 201 is external with respect to stationary assembly 203.

The magnetic spring is formed by axial magnetic attraction of the two coaxial magnet rings 202 and 210 having axial direction of magnetization. The primary function of the flexure bearing formed by the planar springs 214 is to provide radial and tilt support to the movable assembly, while its axial spring rate in the translation direction of the proof mass may be substantially lower than the spring rate of the magnetic spring, for example, by one order of magnitude.

Tubular holder 204 is configured to be coupled to an object for vibration attenuation, for example, to the housing of a linear compressor of a Stirling type cryogenic cooler.

Fig. 3 shows a planar disk spring 214 that is suitable for use in a TDC, according to some embodiments of the invention.

Disk spring 214 may be manufactured, for example, using photoetching of a steel sheet (e.g., 0.25mm SST 302 full hard sheet), featuring a central hole 220, several spiral slits 222 and may include an array of holes 218 on the periphery.

Fig. 4 shows a proof mass 208 suitable for a TDC, according to some embodiments of the invention, featuring axial slits for reducing eddy currents.

Proof mass 208 (actually half of it) should be made of nonmagnetic and low electrically conductive material like stainless steel. Radial slits 224 may be provided to reduce the electrodynamic damping resulting from the generation of eddy currents in the proof ring material. Array of holes 218 matches this of Fig. 3.

Fig. 5 shows the experimentally measured force of reaction of the mechanical spring at different axial positions of the proof mass, according to some embodiments of the invention.

From Fig. 5, the evaluated axial spring rate of flexure bearings is $K_{axial}$ = 1334 $N/m$ ; the coefficient of determination equals 1, indicating high linearity of the mechanical spring over the entire range of axial offsets.

An optimum driving frequency of the cryogenic cooler is 81Hz, thus the required spring rate should be balanced by the magnetic spring formed by the axially and oppositely magnetized coaxial magnetic rings 202, 210 of Fig. 2. The cross section of these rings is optimized such as to provide the required spring rate and high linearity over the entire working range.

Figs. 6A, 6B and 6C show the lines of magnetic flux resulting from magnetic interaction of components of magnetic spring of TDC of Fig. 2, in different relative positions of the magnets, according to some embodiments of the invention.

Fig. 6D is a graph showing the dependence of the force of reaction of the magnetic spring at different axial positions, according to some embodiments of the present invention.

From Fig. 6D, the evaluated spring rate of the magnet spring is $K_{mag}$ = 14340$N/m$, where the coefficient of determination equals 0.9999, indicating high linearity of the magnetic spring over the entire range of axial offsets.

Fig. 6E is a graph showing the line representing the total reaction force produced by the mechanical and magnetic spring, according to some embodiments of the present invention.

Fig. 6E shows a line representing the total reaction force, from which the total spring rate is $K_{total}$ = 15675 $N/m$, and the closeness of the coefficient of determination to 1 indicates high linearity of the total spring over the entire range of the axial offsets. Based on the values of effective mass and total spring rate it is possible to calculate the value of the resonant frequency $f = \frac{1}{2\pi}\sqrt{K_{total}/M} = 80.7\,Hz$ which is quite close to the optimum driving frequency.

An assessment of the resulting damping ratio of the TDC can be made. Assuming damping ratio typical of mechanical springs to be $\zeta_{mech}$ = 0.001 and spring rates ratio $\eta = \frac{14340}{1334} = 10.7$, the effective damping ratio is $\zeta_C = \sqrt{\frac{1}{1+\eta}}\zeta_{mech} = 0.000292$ Assuming the weight of the movable piston assembly of the linear compressor to be 0.028kg and the mass of the TDC to be 0.061kg, the mass ratio will be $\mu = \frac{M_C}{M_P} = \frac{0.061}{0.028} = 2.18$. Assuming the piston stroke in a temperature control mode $\Delta_P$ = 0.0015*m*, the amplitude of the system translation will be $\Delta_S \approx 2\frac{\zeta_C}{\mu}\Delta_P = 2\frac{0.000292}{2.18}0.0015 \approx 4E-07m$, which is sufficiently smaller than the typical depth of focus. For the reference, with no TDC it will be $\Delta_S \approx 2.1E - 05m$. The attained attenuation ratio, is, therefore, 52. It is worth noting that such an attenuation ratio was achieved by adding only 3% to the overall weight of the system in which the TDC is implemented in (e.g., an infrared imager).

Fig. 7 shows a cross-sectional isometric view of a TDC 700, according to some other embodiments of the present invention.

The movable assembly 701 features a cap-like internal tubular holder 702 and an axially magnetized movable magnet ring 704 positioned between two halves of proof mass 706. The movable assembly 701 may be supported on both sides by planar springs 708 featuring spiral slits, thus having high radial stiffness and low axial stiffness. Spacers 710 may be provided to aid the securing of central areas of the circular flexures to the tubular holder 702. A locking nut 712 may be used to be screwed over a threaded portion 714 of the internal holder 702 to tighten the components of the moving assembly against a distal portion 716 (opposite to portion 714) of the holder 702.

The stationary assembly 703 includes an external holder 718, a stationary axially magnetized magnet ring 720 placed between spacers 722, and the peripheral portions of the circular planar springs 708 are secured between external spacers 726. The parts of the stationary assembly are held together by an external locking nut 728, which is screwed over a threaded portion 720 of the holder 220 against distal step wise portion 730 of the internal holder 718. Threading 732 is provided at a distal portion of the holder 220 for screwing the TDC 700 over a matching thread provided on the compressor housing, or of another object for attenuation of vibration export.

TDC 700 has a movable assembly 701 and a stationary assembly 703. Magnet ring 704 of the movable assembly 701 and stationary magnet ring 720 of the stationary assembly 703 form magnetic spring, movable assembly 701 being internal and the stationary magnetic assembly 703 being external with respect to each other.

Fig. 8 shows a TDC 810 according to some embodiments of the present invention, coupled to the compressor of a Stirling type cryogenic cooler 800. Stirling-type cryogenic cooler 800 may include a compressor unit 806 and an expander unit 802, which are pneumatically linked by transfer line 804. TDC 810 (displayed in a cross-sectional manner) is firmly coupled to compressor unit 806, for example, by screwing the stationary assembly of the TDC onto a designated boss 812.

Different embodiments are disclosed herein. Features of certain embodiments may be combined with features of other embodiments; thus certain embodiments may be combinations of features of multiple embodiments. The foregoing description of the embodiments of the invention has been presented for the purposes of illustration and description. It is not intended to be exhaustive or to limit the invention to the precise form disclosed. It should be appreciated by persons skilled in the art that many modifications, variations, substitutions, changes, and equivalents are possible in light of the above teaching. It is, therefore, to be understood that the appended claims are intended to cover all such modifications and changes as fall within the true spirit of the invention.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

**1.** A tuned dynamic counter-balancer (TDC) comprising:

a mount for coupling the TDC to an object for vibration attenuation;
a movable assembly configured to move along a first axis and comprising a movable magnetic ring and a movable proof mass;
a stationary assembly comprising a stationary magnetic ring and coupled to the mount;
a mechanical spring comprising a flexure bearing that includes two planar springs that connect between the movable assembly and the stationary assembly,
wherein the movable magnetic ring and the stationary magnetic ring are arranged coaxially, and wherein a spring rate of the magnetic spring is greater than a spring rate of the mechanical spring.

**2.** The TDC of claim 1, wherein the spring rate of the magnet spring is greater by at least an order of magnitude than the spring rate of the mechanical spring.

3. The TDC of claim 1 or claim 2, wherein the movable magnetic ring is internal with respect to the stationary magnetic ring.

4. The TDC of any of claims 1 to 3, wherein the movable magnetic ring is external with respect to the stationary magnetic ring.

5. The TDC of any of claims 1 to 4, wherein the proof mass comprises a proof ring.

6. The TDC of any of claims 1 to 5, wherein the proof mass is made of two parts.

7. The TDC of claim 6, wherein the two parts are two halves of the proof mass.

8. The TDC of claim 6, wherein the two parts of the proof mass wrap the movable magnetic ring.

9. The TDC of any of claims 1 to 8, wherein the two planar springs are positioned on opposite sides of the movable assembly.

10. The TDC of any of claims 1 to 9, wherein the movable magnetic ring and the stationary magnetic ring are axially and parallelly magnetized.

11. The TDC of any of claims 1 to 10, wherein the movable magnetic ring and the stationary magnetic ring are axially and oppositely magnetized.

12. The TDC of any of claims 1 to 11, wherein the movable magnetic ring and the stationary magnetic ring are axially and unidirectionally magnetized.

13. The TDC of any of claims 1 to 12, wherein the object for vibration attenuation is a compressor of a cryogenic cooler.

14. The TDC of any of claims 1 to 13, wherein the spring rate of the magnetic spring is configured to be $K_{mag} = 4\pi^2 f_{res}^2 M_C - K_{mech}$, where $K_{mag}$ is the spring rate of the magnetic spring, $K_{mech}$ is the spring rate of the mechanical spring, $f_{res}$ is a required resonant frequency of the TDC, which is preferably equal to the driving frequency of the object for vibration attenuation, and $M_c$ is an effective mass of the moving assembly.

15. A compressor of a cryogenic cooler comprising a compressor with the TDC of claim 1 attached to the compressor for vibration attenuation.

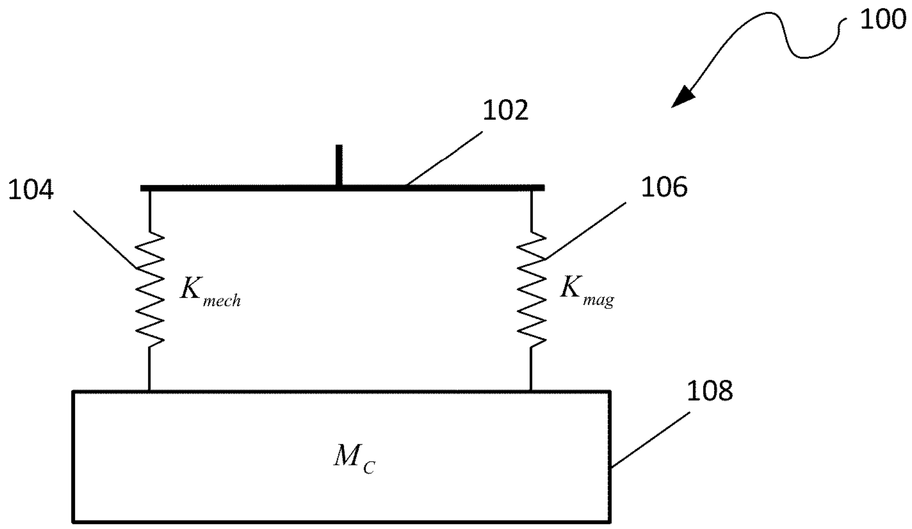


FIG. 1

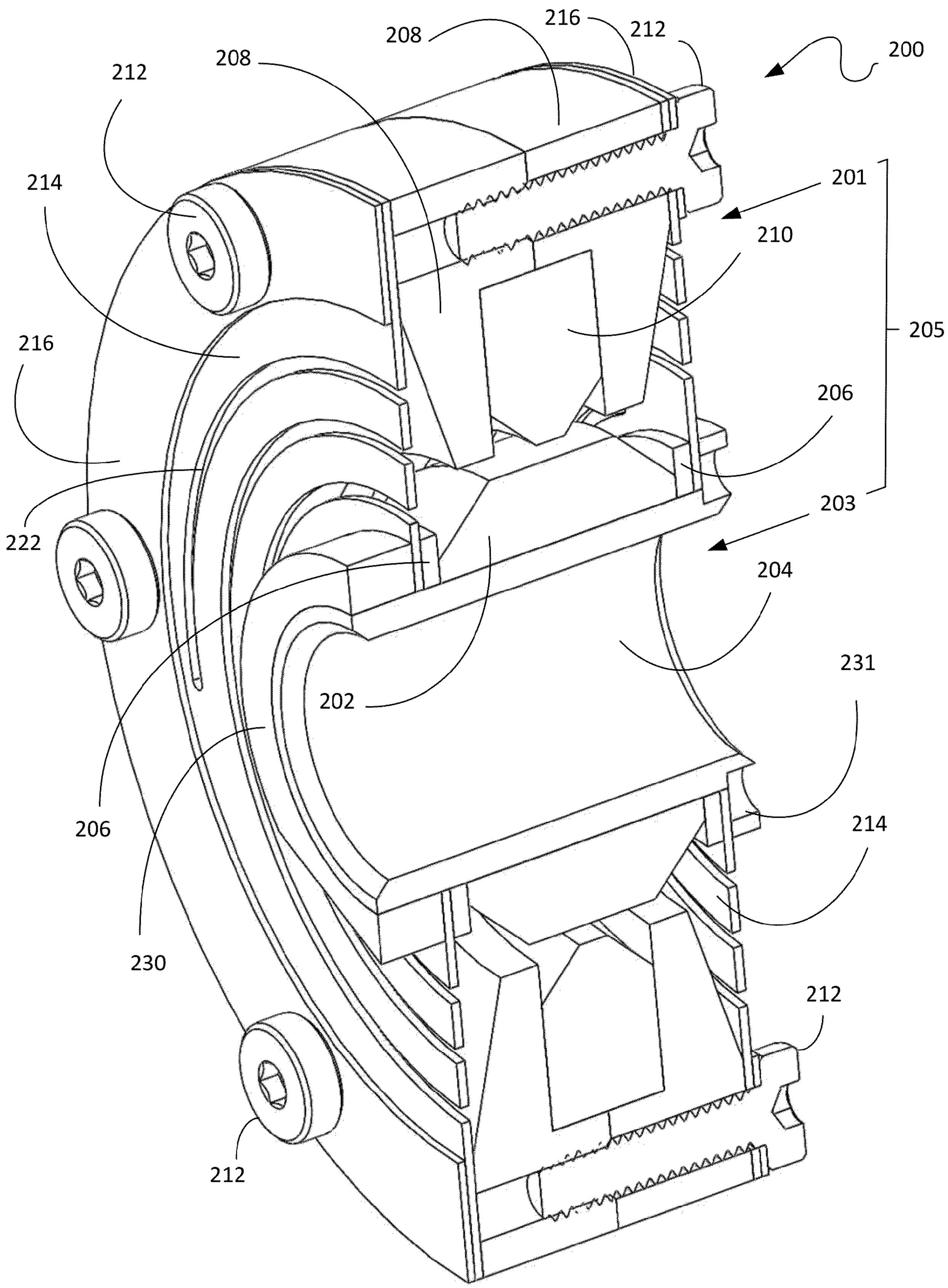
208
216
212
208
200
212
214
201
210
205
216
206
222
203
204
231
202
206
214
230
212
212

FIG. 2

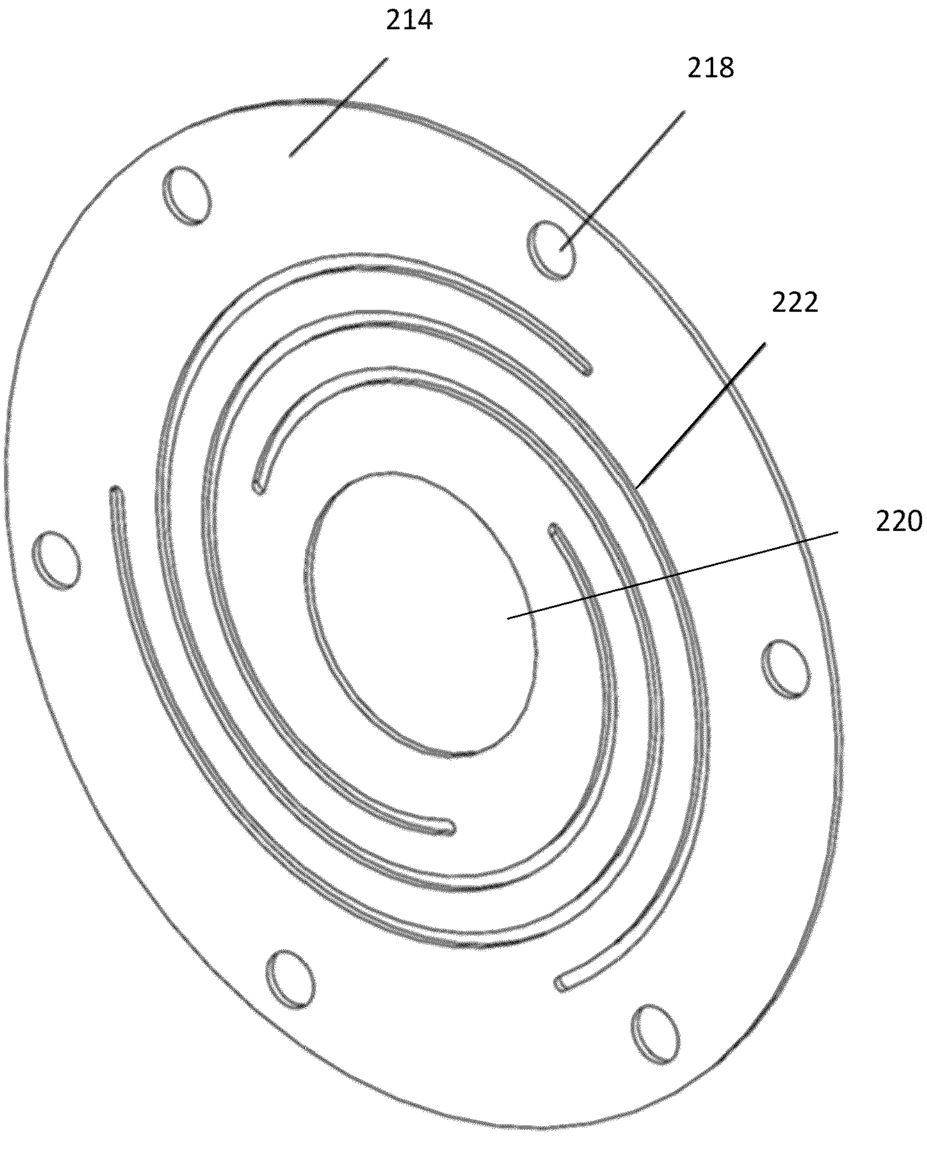


FIG. 3

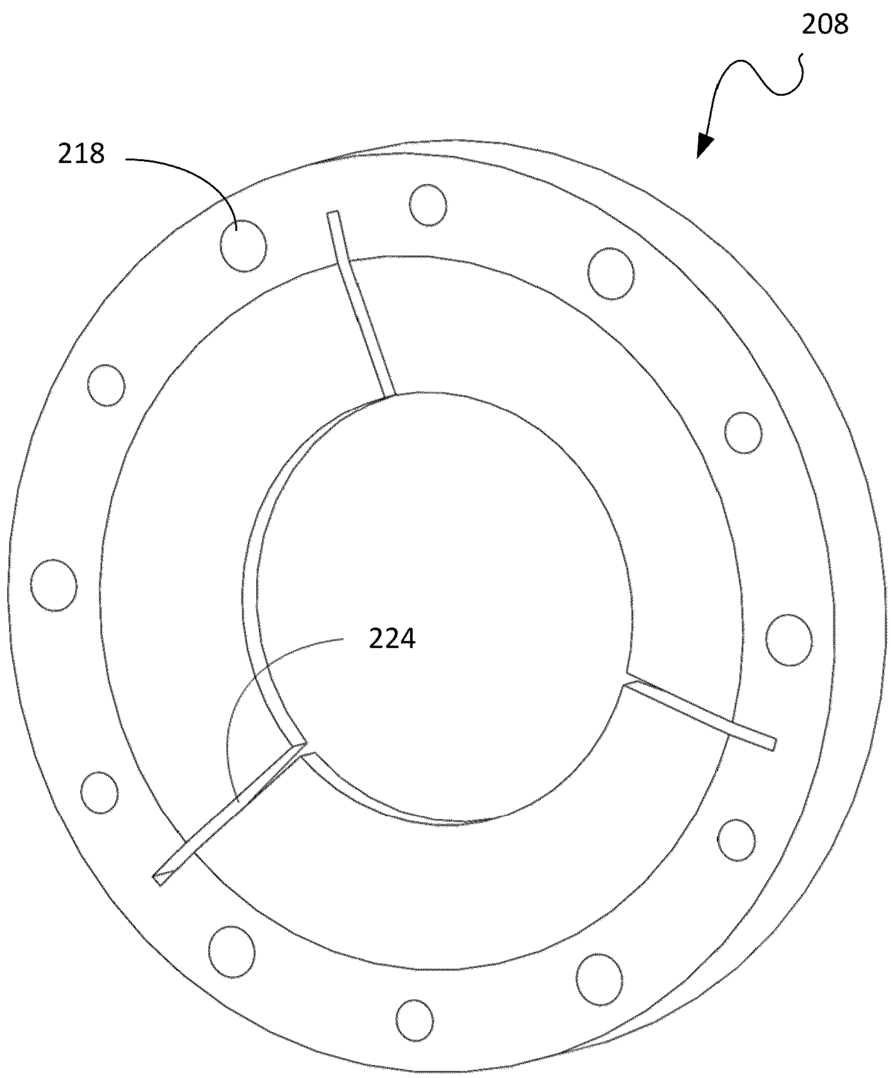


FIG. 4

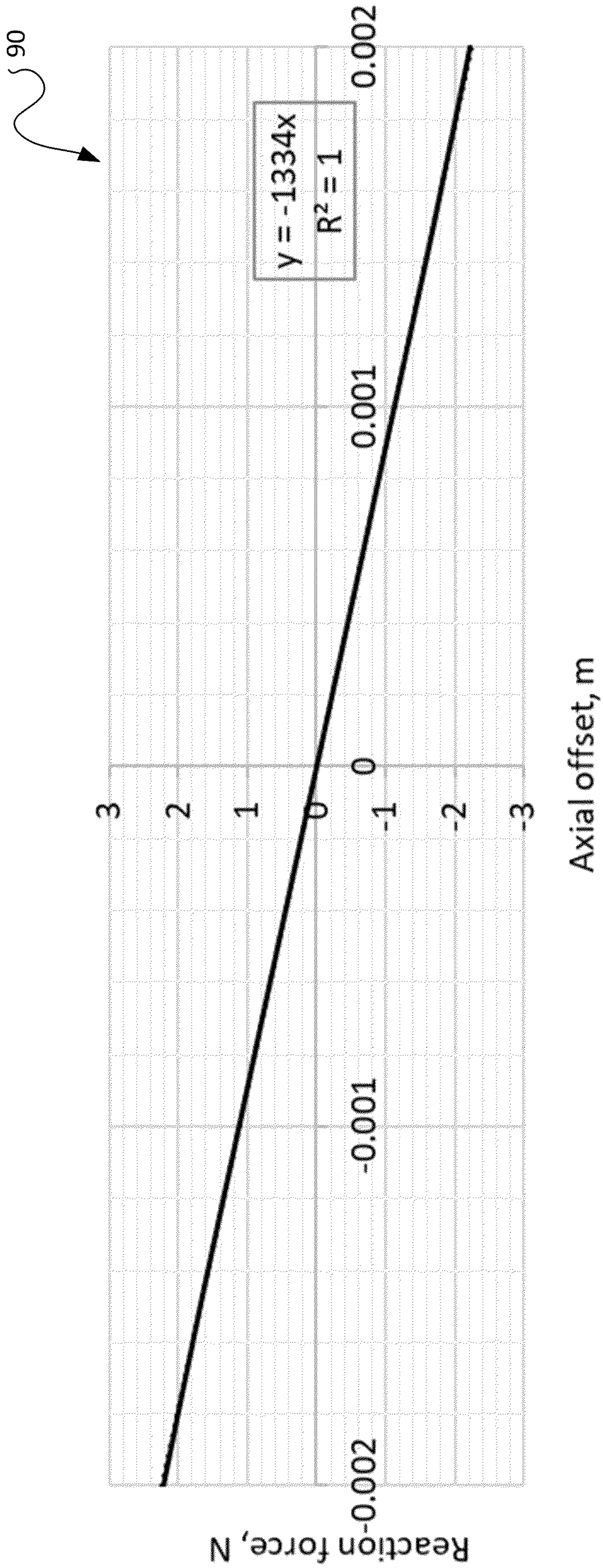
90
y = -1334x
$R^2$ = 1
Reaction force, N
3
2
1
0
-1
-2
-3
-0.002
-0.001
0
0.001
0.002
Axial offset, m

FIG. 5

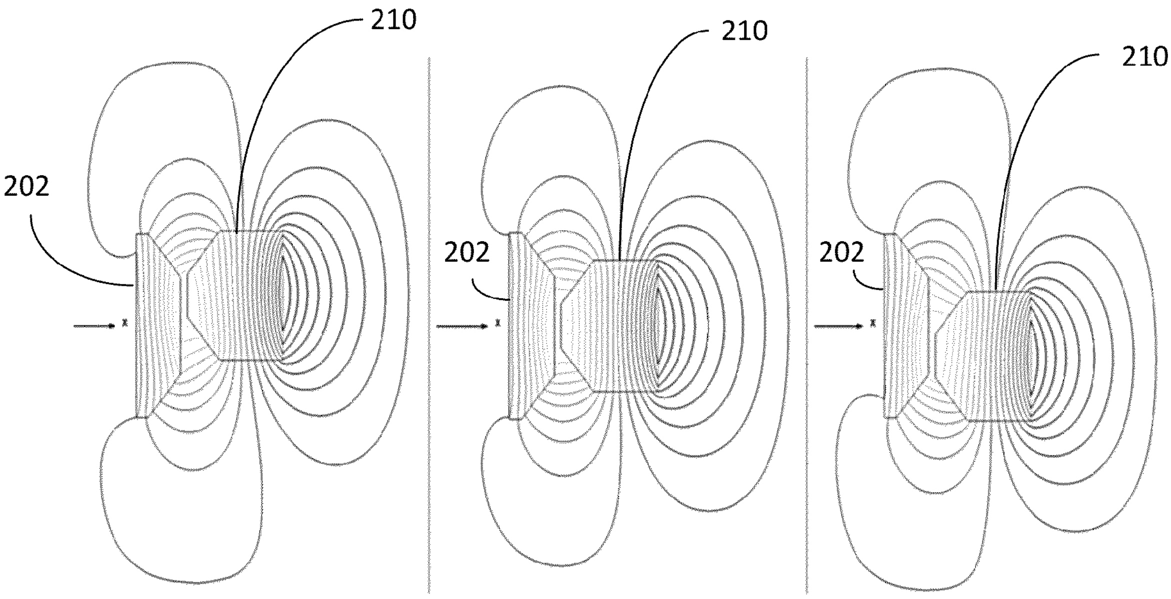


FIG. 6A FIG. 6B FIG. 6C

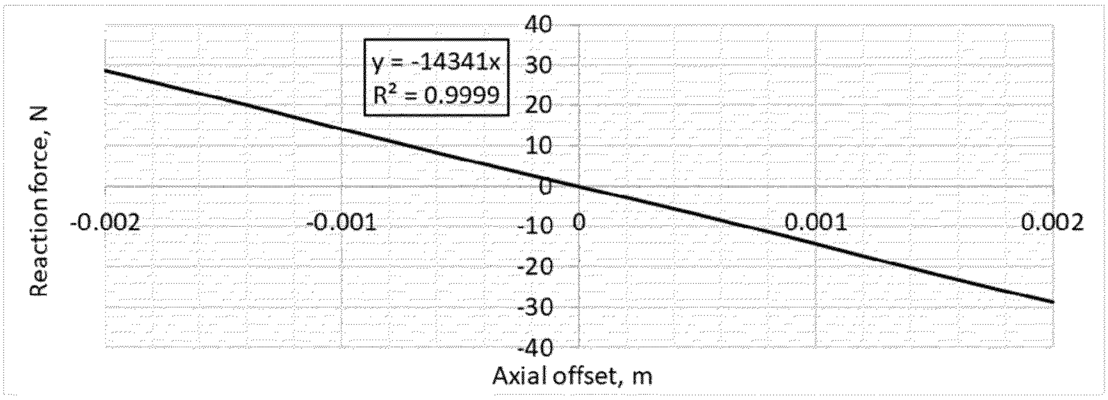


FIG. 6D

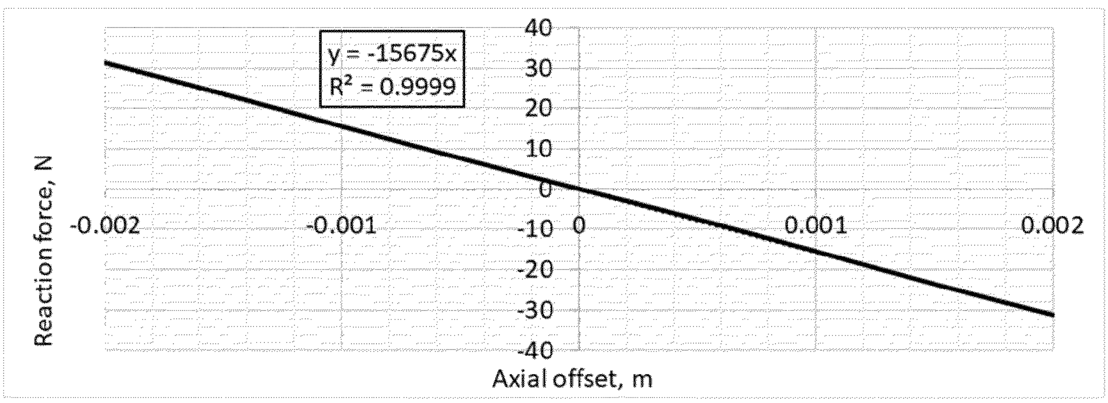


FIG. 6E

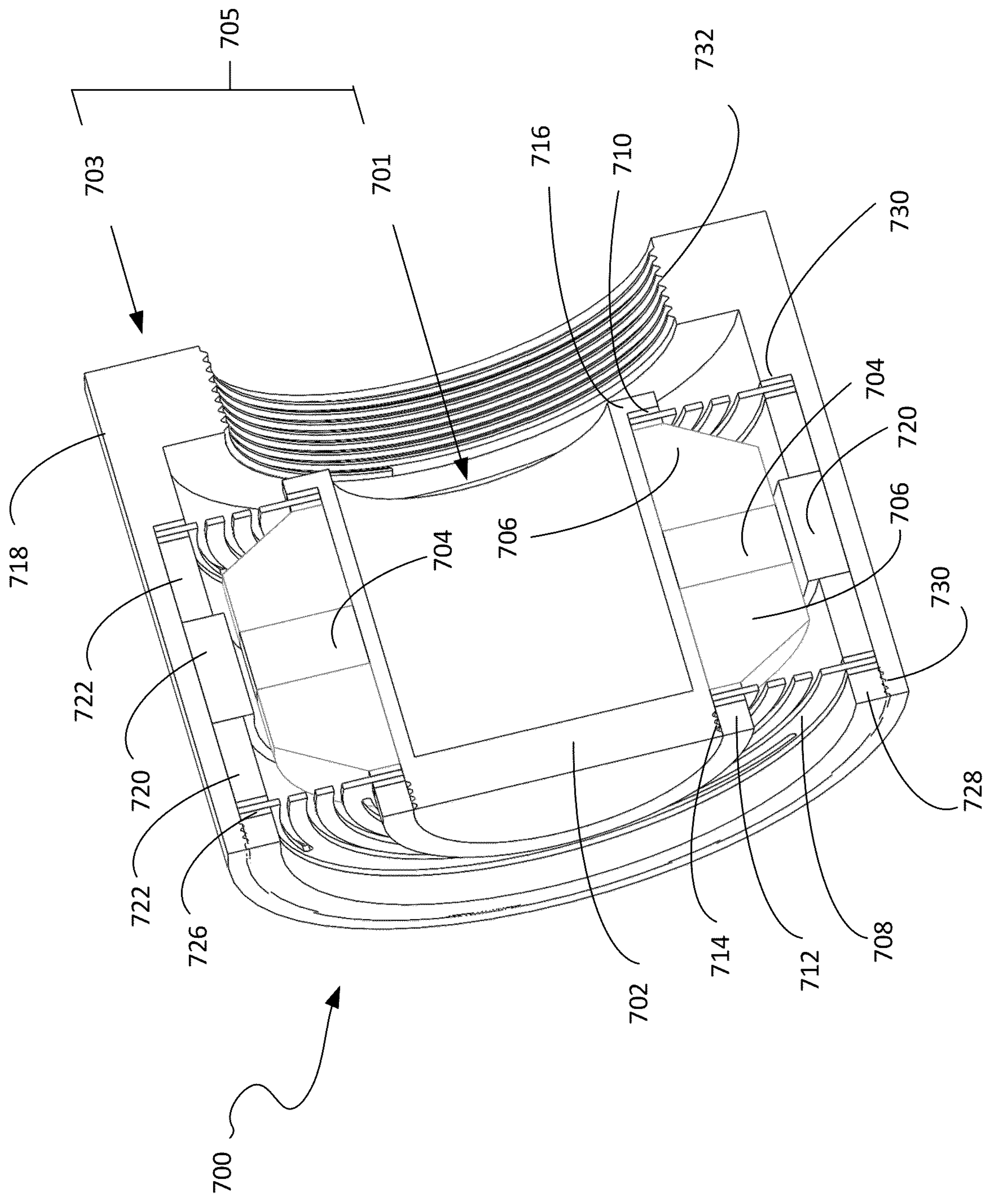
705
703
701
716
710
732
730
704
720
706
704
706
720
718
722
720
722
726
730
728
702
714
712
708
700

FIG. 7

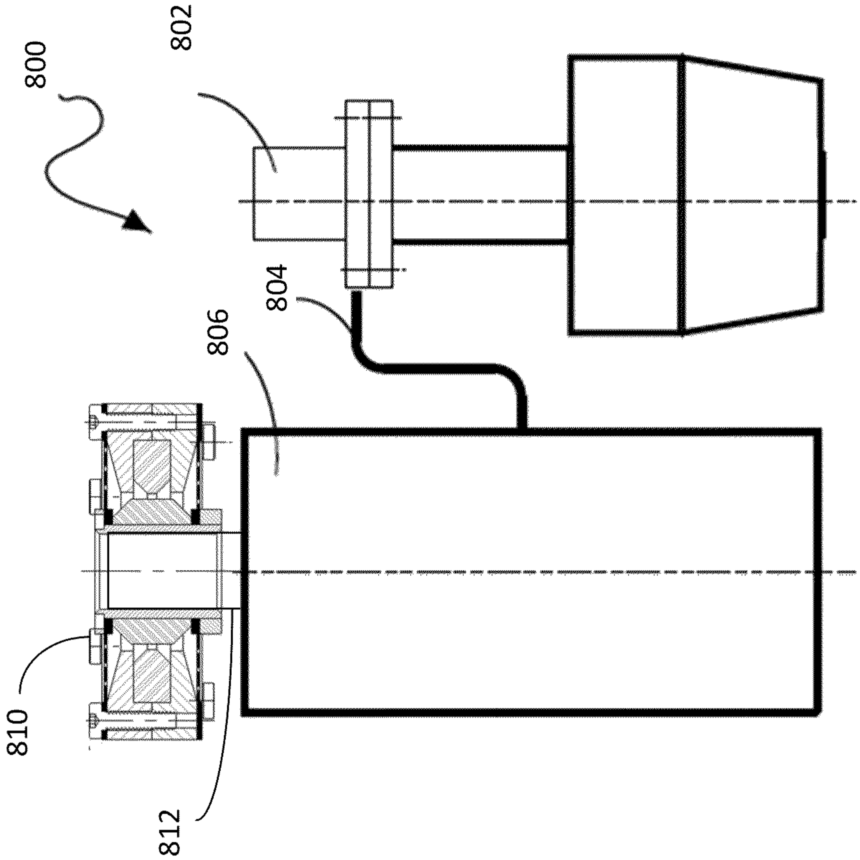


FIG. 8

Europäisches Patentamt
European Patent Office
Office européen des brevets

# EUROPEAN SEARCH REPORT

Application Number
EP 24 20 9842

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 809 486 B2 (STIRLING TECHNOLOGY CO [US]) 26 October 2004 (2004-10-26)<br>* figures 1, 12 *<br>----- | 1-15 | INV.<br>F16F7/116<br>F16F15/03 |
| A | CN 104 747 652 A (UNIV XI AN JIAOTONG) 1 July 2015 (2015-07-01)<br>* claim 1; figures *<br>----- | 1-15 | ADD.<br>F16F1/02<br>F16F6/00 |
| A | DE 198 23 716 A1 (BTR AVS TECHNICAL CENTRE GMBH [DE]) 2 December 1999 (1999-12-02)<br>* figures 1, 3 *<br>----- | 1 | |

TECHNICAL FIELDS SEARCHED (IPC)

F16F
F25B

The present search report has been drawn up for all claims

1

| Place of search | Date of completion of the search | Examiner |
|---|---|---|
| The Hague | 20 March 2025 | Huyge, Kevin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 20 9842

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | Publication date | Patent family member(s) | Publication date |
|---|---|---|---|
| US 6809486 B2 | 26-10-2004 | NONE | |
| CN 104747652 A | 01-07-2015 | NONE | |
| DE 19823716 A1 | 02-12-1999 | DE 19823716 A1 | 02-12-1999 |
| | | WO 9961815 A1 | 02-12-1999 |

EPO FORM P0459

For more details about this annex : see Official Journal of the European Patent Office, No. 12/82